# EUROPEAN PATENT SPECIFICATION

(11) **EP 3 485 203 B1**
(45) Date of publication and mention of the grant of the patent: **04.09.2024**
(21) Application number: 17751448.6
(22) Date of filing: 11.07.2017
(51) Int. Cl.: F24H 1/43, F24H 9/02, F28D 7/02, F28D 21/00

(54) **HEAT EXCHANGER FOR BOILER**
WÄRMETAUSCHER FÜR KESSEL
ECHANGEUR DE CHALEUR POUR CHAUDIÈRE

(30) Priority: 18.07.2016 IT 201600074665
(43) Date of publication of application: 22.05.2019
(60) Divisional application: 20189876.4
(73) Proprietor: ARISTON S.P.A., 60044 Fabriano (AN) (IT); Valmex S.p.A., 61030 Lucrezia di Cartoceto (PU) (IT)
(72) Inventor: BAMBOZZI, Benedetta, 60044 Fabriano (Ancona) (IT); CHIAVETTI, Flavio, 60044 Fabriano (Ancona) (IT); PUCCIARELLI, Renzo, 60044 Fabriano (Ancona) (IT); SPURI, Claudio, 60044 Fabriano (Ancona) (IT)
(74) Representative: Premru, Rok
(86) International application number: PCT/IB2017/000828
(87) International publication number: WO 2018/015799

(56) References cited:
- EP-A1- 0 845 640
- EP-A1- 2 995 880
- EP-A2- 1 703 227
- AT-A4- 508 158
- US-A1- 2007 099 134
- US-A1- 2008 185 131
- US-A1- 2008 186 039
- US-A1- 2015 292 768

## Description

The present invention relates to a heat exchanger for a boiler or the like.

The invention therefore falls within the field of high yield heat generators (with yields, referred to the Inferior Calorific Power, in the range of 95-100%), in particular in that of condensing boilers for room heating and/or production of domestic hot water.

Generally, a boiler is a device wherein water to be heated (both for sanitary uses and rooms heating), runs through a heat exchanger cooperating with a gas burner. Said gas burner may comprise a pipe bundle, preferably spiral wound, being said turns crossed by combustion gases, or fumes, generated by the gas burner, so as to transfer heat to the water running through it.

Said combustion gases, after having transferred their heat to water, including the latent condensation heat, are discharged outside of the exchanger and of the gas boiler.

Said boilers have been perfected and improved over time, so as to provide the user with increasingly safe and performing devices.

Currently, one of the major problems regarding the boilers, is given by the temperature control both of the water delivered and of the same heat exchanger. As for the water delivered, it is important to know its temperature so as to verify whether the boiler is working according to the parameters required and set by the user.

For example, if the boiler delivered water colder than the set temperature, it should work longer in order to reach the desired thermal comfort or, in case it was used for sanitaryware, it would create discomfort to the user.

Moreover, a punctual and accurate control of the temperature of the exchanger allows preventing breakages or damages to the system.

In fact, in the event that the burner was activated without water in the heat exchanger, said exchanger would overheat causing structural damages that may compromise the operation and/or integrity thereof.

For example, the pipe bundle may deform or pierce due to the flames and the strong heat, affecting its functionality irreversibly.

Another problem of particular concern for the condensing boilers is due to the impossibility or difficulty of regulating and/or modifying the dimensions of the combustion chamber.

The solutions proposed so far from the prior art are insufficient.

For example heat exchangers have been developed provided with temperature probes or sensors, so as to monitor the temperature thereof.

The U.S. patent No. US2007099134 describes a water heater with the features of the preamble of claim 1, in particular a heater for the production of hot water capable of recovering the heat coming from the combustion gas generated by a burner.

Said heater comprises a burner, a fan for the supply of air for the combustion, a heat exchanger wherein the fuel gas together with air is delivered, a water pipe that recovers the sensitive heat and the latent heat from the combustion gas, a control unit, provided with a data table, adapted to regulate said fan based on the data of said table.

At the inlet and outlet of the exchanger, the heater is further provided with temperature sensors (not described); the combustion level is determined based on the water inlet and outlet temperature values.

The heater comprises a fixed partition dividing the combustion chamber into two different and not modifiable zones.

However, according to the prior art, said temperature sensors or probes, are positioned on the connecting unions or sleeves joining the end of the exchanger with the pipes of the heating or sanitaryware hydraulic system; this limits the sensitivity of said sensors.

Normally, said connecting unions or sleeves facilitate the connection between the end of the exchanger, not always easily accessible or reachable, and said pipes. Said connecting unions or sleeves are usually made of plastics or the like, and have relatively low heat transmission coefficients.

This leads the thermal probe to operate with delay and inaccuracy, generating measuring errors and low readiness of the boiler, or in general of its control means, to react in order to bring the measured parameters in line with the set parameters. In other cases, because of the reduced spaces available and in order to guarantee easy access, said temperature sensors or probes are not installed in the immediate vicinity of the ends of the exchanger, and the data they measure may be affected by the distance of the sensor from the water inlet and outlet point.

Another example of exchanger is illustrated in the U.S. patent No. US20080185131 that shows a heat exchanger for a gas boiler for the production of hot water, comprising an enclosure, a pipe forming a plurality of coils wherealong water runs, deflector means to guide the combustion fumes and spacer means in order to space the turns from each other.

Said exchanger comprises a disc, not better described but of solid shape, dividing into two the combustion chamber.

Said disc, presumably made of refractory material, is difficult to produce, due to the envisaged coupling with the coils of the pipe bundle, and the document does not illustrate any ways for producing or installing it.

As is known, in fact, the refractory materials require more complex production steps, particularly if particular geometric shapes are provided.

The object of the present invention is to solve the problems described above, by providing a heat exchanger capable of readily and correctly detecting the temperature of the heat transfer fluid crossing it.

A further object of the present invention, at least for one or more executive variants, is to provide an exchanger allowing a direct connection between its ends and the hydraulic pipes.

A further object of the present invention, at least for one or more executive variants, is to provide an exchanger that allows varying the dimensions of the combustion chamber of a condensing boiler, in particular that allows varying the dimensions of the "sensitive chamber" and of the "condensing chamber" of said combustion chamber.

These and other objects, which shall appear clear hereinafter, are achieved with a heat exchanger, illustrated in the following description and in the annexed claims, which constitute an integral part of the description itself.

Further features of the present invention shall be better highlighted by the following description of a preferred embodiment, in accordance with the patent claims and illustrated, purely by way of a non-limiting example, in the annexed drawing tables, in which:
- Fig. 1 is a perspective view of a possible executive variant of the exchanger according to the present invention;
- Fig. 2 is a front view of the exchanger of Fig. 1;
- Fig. 3 is an exploded view of the exchanger of Fig. 1;

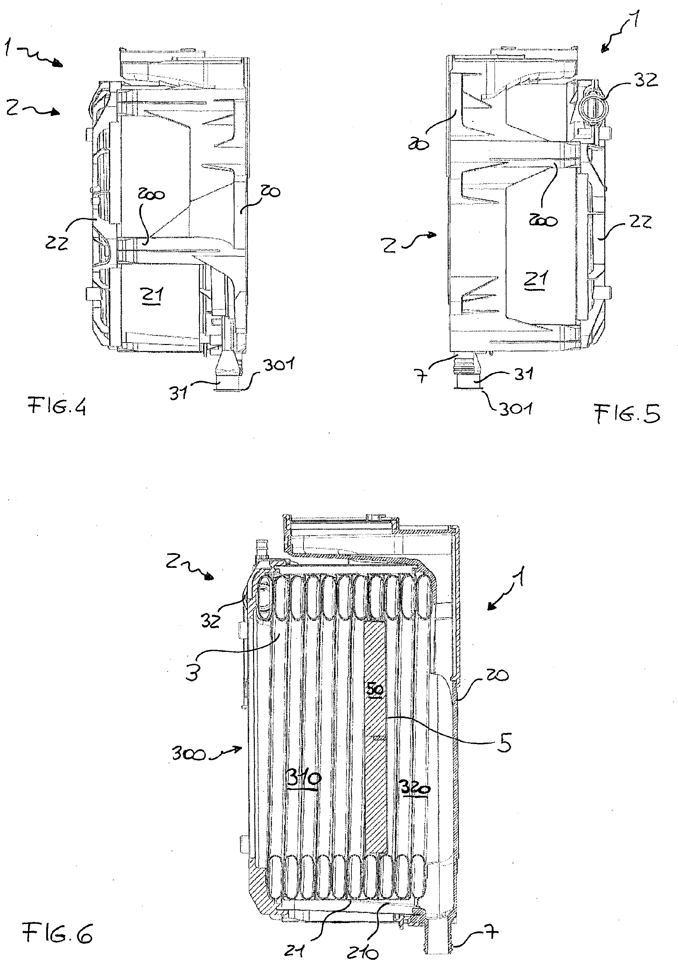

- Fig. 4 is a side view of the exchanger of Fig. 1;
- Fig. 5 is a side view of the exchanger of Fig. 1;
- Fig. 6 is a section view of the exchanger of Fig. 1;
- Fig. 7 is a perspective view of a component of the container body of the exchanger of Fig. 1;
- Fig. 8 is a front view of the coil of the exchanger of Fig. 1;
- Fig. 9 is a perspective view of the exchanger of Fig. 8.

Unless where otherwise specified, in this report any possible spatial reference such as the terms "up/down, front/rear, right/left etc." refers to the position in which the elements are represented in the annexed figures.

With the purpose of highlighting some features instead of others, not necessarily what described in the annexed drawings is perfectly to scale.

The heat exchanger 1, hereinafter for simplicity referred to as exchanger 1, comprises a suitable container body 2, at least one coil 3, and at least one temperature sensor means 4.

The term coil is to be intended as a pipe bundle made by a pipe 3, preferably metallic, spiral wound around a central axis, adapted to form a suitable number of turns, and delimiting a combustion chamber 300 wherein the fumes produced by a burner (not shown) are introduced.

Said coil 3 is advantageously made as a single component, i.e., it is defined by a seamless single element.

The coil 3 is thus devoid of welds and/or junctions; this favours a uniform and homogeneous deformation, due to the temperatures to which it is subject.

The coil 3 provides at least a first end 31, which acts as an inlet for the heat transfer fluid to be heated, and at least a second end 32, which acts as an outlet for said heat transfer fluid.

According to a preferred variant, said coil 3 has an elliptical section, while said ends 31 and 32 has a circular section that eases the operations of connection to the pipes of the water system or to any mechanical components (adjusting valves, pumps, etc.).

Advantageously, said ends 31 and 32 are obtained by shaping the elliptical section by known mechanical processes for plastic deformation, so as to obtain a change of section, from elliptical to circular, without the help and the mounting of additional elements such as unions, manifolds or the like; this allows a metallic continuity between the exchanger and the pipes.

Vice versa, still with known processes, the section of the coil 3 is deformed from circular to elliptical except for said ends 31 and 32.

The exchanger 1 according to the present invention is characterised in that the ends 31 and 32 project from the container body 2, in such extent as to guarantee an easy access to the same.

In general, the container body 2 may be made according to different executive variants, all characterised in that the ends 31 and 32 of the coil 3 project from said container body 2.

Such feature, in accordance with the exchanger according to the present invention, advantageously allows positioning and installing the sensor means 4 on said ends 31 and 32.

This way the sensor means 4 are able to measure the temperature of the water in the immediate vicinity of the inlet and/or outlet of the exchanger 1, avoiding any alteration of the data detected due to the distance between the end of the exchanger and the position of the sensor.

Further, according to said embodiment variant, the sensor means 4 are advantageously in direct contact with the metal walls of the coil 3, so as to control its temperature more effectively.

Such arrangement allows measuring the temperature of the coil 3 more accurately and faster, solving the problems of the prior art illustrated above.

In fact, the metallic walls of the coil 3 have higher heat exchange coefficients than the plastic materials used for the unions or the like currently used and the sensor means 4 may detect the temperature value faster and more promptly.

Further, since the ends 31 and 32 project from the container body 2, said sensor means are easily accessible and reachable from outside; this allows easy and quick maintenance and/or change of the same.

Said sensor means 4 maybe constrained and fixed to the end 31 and 32 of the coil 3 through suitable mounting means 40.

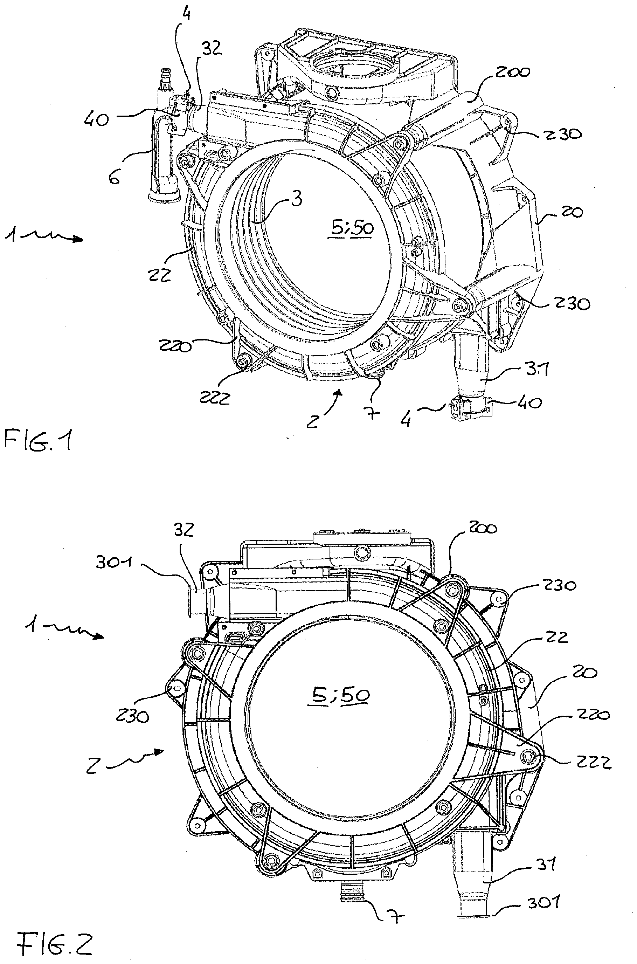

According to a first embodiment variant, shown in Fig. 1, said mounting means 40 comprise the fixing means, such as for example the metal clips, which carry out the locking of the said ends 31 and 32 with the pipes of the heating hydraulic system or of the sanitaryware (not illustrated).

In fact, thanks to the projection of the ends 31 and 32 from the container body 2, it is possible to avoid the use of the current unions or sleeves, carrying out a direct connection between said ends 31 and 32 and the pipes, said connection being guaranteed and carried out by said fixing means.

Said fixing means, therefore, carry out and ensure the attachment of the exchanger to the pipes and do not carry out any connecting function between the parts, i.e. the water flows directly from the pipe to the first end 31 and from the second end 32 to the pipe.

In order to ease the connection of the parts and obtain a stable and secure connection, said ends 31 and 32 may be provided with suitable collars 301.

Said collars 301 are obtained and defined at the inlet of said ends 31 and 32 and cooperate with said fixing means.

Nothing prevents said fixing means 40 from comprising, for example, couplable half-shells, straps, clamps, or the like.

Said ends 31 and 32 may be arranged according to different executive variants, provided by way of a non-limiting example.

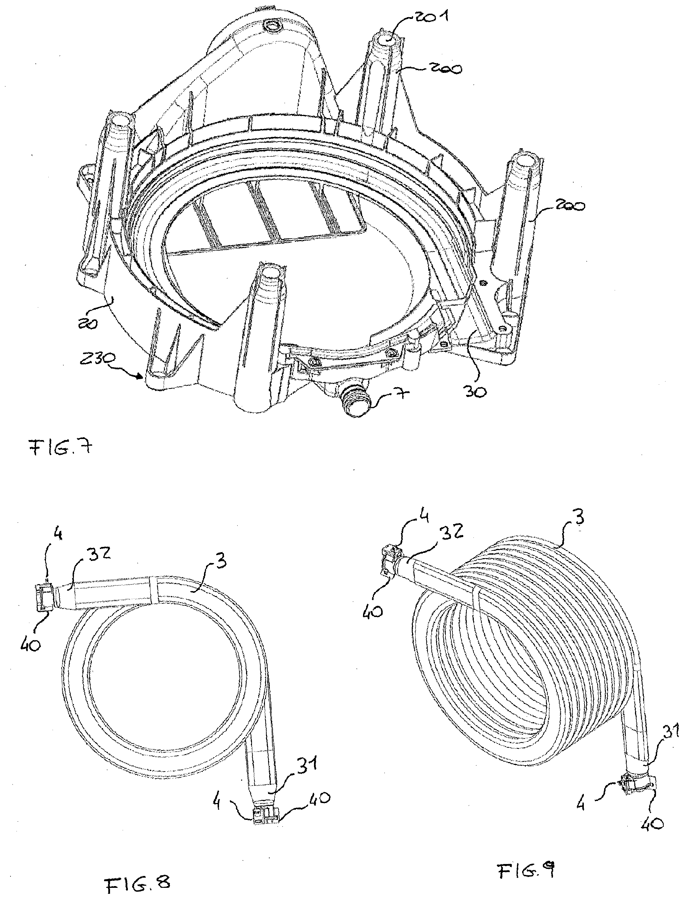

For example, said ends 31 and 32 may be arranged with the reciprocal longitudinal axes parallel to each other (variant not illustrated) or may be arranged with the reciprocal longitudinal axes orthogonal to each other (Figs. 8 and 9).

Said last variant, shown in the accompanying figures, allows having the end 32 substantially horizontal relative to the exchanger 1 (Fig. 2); this allows easily installing a deaerator 6, substantially a device used to eliminate air or gas contained in hydraulic systems or the like, and improving the release and venting of the air.

Moreover, being said end 32 projecting from the container body 2, the installation of the deaerator 6 is of easy access for the operator, so as to ease him in the maintenance or change steps of the same.

Said exchanger 1 is advantageously provided with a partition 5, particularly useful in the case of condensing boilers, provided with a suitable layer of insulating material 50.

Said partition 5, substantially a disc-shaped element, divides said combustion chamber 300 into two parts; a first exchanging chamber 310 called "sensitive exchanger" and a second exchanging chamber 320 called "cold exchanger" or "condensing".

As it is known, the first exchanging chamber 310 is exposed to the flames of the burner, and the fume flow occurs in a radial direction (i.e. orthogonal to the central axis of the exchanger 1); therefore, each fume thread exchanges heat individually with a single turn of those present.

The partially cooled fumes are guided towards the second exchanging chamber 320, where they are further cooled to such a temperature as to have the condensation of part of the water vapour contained therein and then sent to a stack (not shown) for being discharged to the atmosphere.

Said partition 5 prevents the direct communication between the respective first chamber 310 and second chamber 320, guaranteeing the above described flow of the combustion fumes.

Moreover, said partition 5 is "screwed" along the turns of the coil 3.

In substance, the partition 5 may be moved along said coil 3 with a rotary movement similar to screwing; this allows modifying the position of said partition 5 and thus regulating and varying the dimensions of the said chambers 310 and 320.

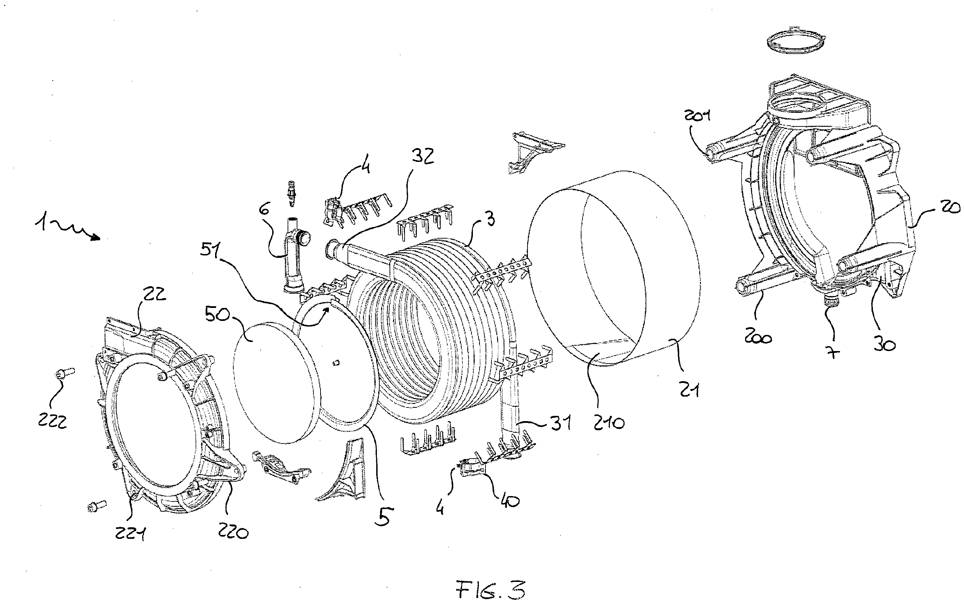

For this purpose the partition 5 is shaped so as to provide a guiding slot to ease said screwing, in particular said partition 5 comprises a disc, preferably of sheet, having an outer profile 51 with helical pattern (Fig. 3).

Such shape of the partition 5 simplifies the manufacture step, since it is possible to make a disc and shape the outer profile 51 thereof according to known techniques, and subsequently to suitably position and arrange the layer of insulating material 50.

This allows obtaining the disc 5 according to the most advantageous and efficient manufacturing techniques, allowing to simplify the production process, and not to bind the manufacturer to make said partition 5 entirely of refractory material. Said shape of the partition 5 also eases the mounting and insertion of the same on the coil 3.

According to a possible executive variant, provided by way of a non-limiting example, the container body 2 may comprise a suitably shaped bottom 20, a shell 21 and a cover 22.

Said bottom 20 and said cover 22 are couplable to each other through suitable fixing means, described below, so as to be able to house, in cooperation with said shell 21, the coil 3.

For this purpose a plurality of seats may be advantageously provided, suitably shaped and moulded, adapted to replicate and reproduce the outer profile of said coil 3, so as to facilitate the insertion of the same in said bottom 20.

For example the bottom 20 is provided with a seat 30 adapted to receive the end 31 of the coil 3.

The complementarity of the surfaces of said bottom 20 and of said cover 22 with said coil 3, avoids possible clearances or any gap that may lead to vibrations or movements of the coil 3 inside the container body 2, perhaps during the transport or installation operations.

Said bottom 20 is further provided with suitable longitudinal projections 200, substantially supports whereon said cover 22 is fixed, by screws or the like, so as to lock and clamp the various elements that make up said heat exchanger.

Said longitudinal projections 200 may be provided with threaded holes 201 whereon the screws 222 are screwed.

For this purpose said cover 22 may be advantageously provided with a plurality of appendices 220 extending radially outwards.

Said appendices 220 may be provided with through holes 221 whereon the screws 222 are inserted that screwing on said longitudinal projections 200, clamp said cover 22 to said bottom 20.

Moreover, said bottom 20 may be provided with suitable through holes 230 that allow the mounting and fixing of the exchanger 1 to the body of the boiler.

The shell 21 has a substantially cylindrical shape and may be advantageously made of metal, for example of stainless steel.

Moreover the shell 21 may be provided, entirely or partially, with a layer of insulating material capable of retaining the heat within the combustion chamber 300, to the advantage of energy efficiency, and avoiding high temperature surfaces to be exposed, potentially critical and dangerous for the user and/or the mechanical and/or electrical devices arranged in the proximity of them.

Said shell 21 is advantageously placed and enclosed between said bottom 20 and said cover 22.

According to a possible executive variant, the shell 21 is retained into position thanks to the coupling with suitable seats (not illustrated) provided and obtained on said bottom 20 and cover 22.

In particular, the edges of the shell 21 insert and engage with suitable grooves and/or edges, whereon sealant may be advantageously placed.

Moreover, a channel 210 adapted to convey the condensation towards the condensation discharge 7 may be provided on the shell 21.

The exchanger 1 according to the present invention provides and allows the ends 31 and 32 to project from the container body 2 wherein it is housed.

In particular, observing the figures, it is understood that said ends 31 and 32 project from the container body 2, allowing the user to easily reach the same.

Such accessibility eases the connections of the pipes that, according to a preferred variant, takes place through fixing means, such as for example a metal clip, cooperating with the collars 301 obtained and defined at the inlet of said ends 31 and 32.

In general, therefore, the container body 2 may be made according to different executive variants, all characterised in that the ends of the coil 3 project from said container body 2.

Such feature allows:
- the installation of sensor means 4 on said ends 31 and 32, so as to make them accessible and reachable from the outside for any maintenance and/or changing operation;
- greater accessibility that simplifies the installation, maintenance, control and/or changing operations of the exchanger and its components;
- more prompt and accurate temperature detection;
- direct connection between said ends 31 and 32 and the pipes of the heating hydraulic system or of the sanitaryware;
- avoiding the use of connecting unions or sleeves for connecting said ends 31 and 32 to the pipes.

It is clear that in the practical embodiment of the invention numerous modifications and further variants may be provided, all falling within the same inventive concept; all the various components and details previously described may also be replaced by technically equivalent elements.

For example, the container body may comprise half-shells couplable to each other, suitably shaped so as to allow the projection of the ends of the coil.

## Claims

1. Heat exchanger (1) for gas condensing boilers, provided with a suitable container body (2), at least one pipe bundle (3), at least one temperature sensor means (4), where said pipe bundle (3) is made by a pipe (3) spiral wound around a central axis, adapted to form a suitable number of turns delimiting a combustion chamber (300), and provides a first end (31) which serves as an inlet for the heat transfer fluid to be heated, and a second end (32) which serves as an outlet for said heat transfer fluid, wherein said first and second ends (31; 32) protrude from said container body (2),
wherein said exchanger (1) is provided with a partition (5) adapted to divide the combustion chamber (300) into a first sensitive chamber (310) and into a second condensing chamber (320),
wherein
- said partition (5) comprises a disc-shaped element having an outer profile (51) with helical pattern, provided with a layer of insulating material (50),
- said partition (5) is screwable along the turns of the pipe bundle (3), so as to regulate and vary the dimensions of the said chambers (310; 320), and **characterised in that**
- said at least one temperature sensor means (4) is constrained and fixed to said first and second ends (31; 32) through appropriate mounting means (40);
- said mounting means (40) (40) comprise the fixing means that carry out the locking of the said ends (31; 32) with the pipes.

2. Heat exchanger according to the previous claim, wherein said at least one temperature sensor means (4) is in direct contact with the surface of said pipe bundle (3).

3. Heat exchanger according to claim 1, wherein said mounting means (40) comprise couplable half-shells, straps, clamps, or the like.

4. Heat exchanger according to any previous claim, wherein said pipe bundle (3) is made as a single component, i.e. it is defined by a seamless single element.

5. Heat exchanger according to any previous claim, wherein said container body (2) comprises at least a bottom (20) suitably shaped, at least one shell (21) and at least one cover (22), said bottom (20) and said cover (22) being couplable to one another so as to be able to house, in cooperation with said shell (21), the pipe bundle (3).

6. Heat exchanger according to the previous claim, wherein said bottom (20) and said cover (22) are provided with a plurality of seats, suitably shaped and moulded, adapted to replicate and reproduce the external profile of said pipe bundle (3).

7. Heat exchanger according to the previous claims 5 or 6, wherein said bottom (20) is provided with appropriate longitudinal projections (200), whereon said cover (22) is fixed, by screws (222) or the like, so as to lock and clamp the various elements that make up said heat exchanger (1).

8. Heat exchanger according to the previous claim, wherein said longitudinal projections (200) may be provided with threaded holes (201) whereon said screws (222) are screwed.

9. Heat exchanger according to at least claim 5, wherein said cover (22) is provided with a plurality of appendices (220) which extend radially outwards, each provided with a through hole (221).

10. Heat exchanger according to any previous claim from 5 onwards, wherein said shell (21) is provided, entirely or partially, with a layer of insulating material capable of retaining the heat within the combustion chamber (300).

11. Heat exchanger (1) according to any previous claim, wherein said pipe bundle (3) has an elliptical section, while said first and second ends (31; 32) has a circular section that eases the operations of connection to the pipes of a water system or to any mechanical components.

## Patentansprüche

1. Wärmetauscher (1) für Gas-Brennwertkessel, versehen mit einem geeigneten Behälterkörper (2), mindestens einem Rohrbündel (3), mindestens einem Temperatursensormittel (4), wobei das Rohrbündel (3) durch ein Rohr (3) hergestellt ist, das spiralförmig um eine Mittelachse gewickelt ist, das dazu ausgelegt ist, um eine geeignete Anzahl von Windungen zu bilden, die eine Brennkammer (300) begrenzen, und ein erstes Ende (31), das als Einlass für die zu erhitzende Wärmeträgerflüssigkeit dient, und ein zweites Ende (32) vorsieht, das als Auslass für die Wärmeträgerflüssigkeit dient,
wobei das erste und das zweite Ende (31; 32) aus dem Behälterkörper (2) herausragen,
wobei der Wärmetauscher (1) mit einer Trennwand (5) versehen ist, die dazu ausgelegt ist, die Brennkammer (300) in eine erste empfindliche Kammer (310) und in eine zweite Kondensationskammer (320) zu unterteilen,
wobei
- die Trennwand (5) ein scheibenförmiges Element umfasst, das ein Außenprofil (51) mit spiralförmigem Muster aufweist, das mit einer Schicht Isoliermaterial (50) versehen ist,
- die Trennwand (5) entlang der Windungen des Rohrbündels (3) schraubbar ist, um die Abmessungen der Kammern (310; 320) zu regulieren und zu variieren,
und **dadurch gekennzeichnet, dass**
- das mindestens eine Temperatursensormittel (4) durch geeignete Montagemittel (40) an dem ersten und dem zweiten Ende (31; 32) befestigt und fixiert ist;
- die Montagemittel (40) (40) Befestigungsmittel umfassen, die die Verriegelung der Enden (31; 32) mit den Rohren durchführen.

2. Wärmetauscher nach dem vorhergehenden Anspruch, wobei das mindestens eine Temperatursensormittel (4) in direktem Kontakt mit der Oberfläche des Rohrbündels (3) ist.

3. Wärmetauscher nach Anspruch 1, wobei die Montagemittel (40) kuppelbare Halbschalen, Riemen, Klemmen oder dergleichen umfassen.

4. Wärmetauscher nach einem der vorhergehenden Ansprüche, wobei das Rohrbündel (3) als eine einzelne Komponente hergestellt ist, d.h. es ist durch ein nahtloses einzelnes Element definiert.

5. Wärmetauscher nach einem der vorhergehenden Ansprüche, wobei der Behälterkörper (2) mindestens einen geeignet geformten Boden (20), mindestens eine Hülle (21) und mindestens eine Abdeckung (22) umfasst, wobei der Boden (20) und die Abdeckung (22) miteinander koppelbar sind, um im Zusammenwirken mit der Hülle (21) das Rohrbündel (3) aufnehmen zu können.

6. Wärmetauscher nach dem vorherigen Anspruch, wobei der Boden (20) und die Abdeckung (22) mit mehreren Sitzen versehen sind, die geeignet gestaltet und geformt sind, die dazu ausgelegt sind, das Außenprofil des Rohrbündels (3) nachzubilden und zu reproduzieren.

7. Wärmetauscher nach den vorhergehenden Ansprüchen 5 oder 6, wobei der Boden (20) mit geeigneten Längsvorsprüngen (200) versehen ist, an denen der Deckel (22) durch Schrauben (222) oder dergleichen derart befestigt ist, um die verschiedenen Elemente, aus denen der Wärmetauscher (1) besteht, zu verriegeln und festzuklemmen.

8. Wärmetauscher nach dem vorherigen Anspruch, wobei die Längsvorsprünge (200) mit Gewindebohrungen (201) versehen sein können, in die die Schrauben (222) eingeschraubt sind.

9. Wärmetauscher nach mindestens Anspruch 5, wobei die Abdeckung (22) mit mehreren Anhängen (220) versehen ist, die sich radial nach außen erstrecken, die jeweils mit einem Durchgangsloch (221) versehen sind.

10. Wärmetauscher nach einem der vorhergehenden Ansprüche ab Anspruch 5, wobei die Hülle (21) ganz oder teilweise mit einer Schicht Isoliermaterial versehen ist, das in der Lage ist, die Wärme innerhalb der Brennkammer (300) zu speichern.

11. Wärmetauscher (1) nach einem der vorhergehenden Ansprüche, wobei das Rohrbündel (3) einen elliptischen Querschnitt aufweist, während das erste und das zweite Ende (31; 32) einen kreisförmigen Querschnitt aufweisen, der die Vorgänge des Verbindens mit den Rohren eines Wassersystems oder mit mechanischen Komponenten erleichtert.

## Revendications

1. Échangeur de chaleur (1) pour chaudières à gaz à condensation, muni d'un corps de récipient approprié (2), d'au moins un faisceau de tuyaux (3), d'au moins un moyen de détection de température (4), où ledit faisceau de tuyaux (3) est constitué d'un tuyau (3) enroulé en spirale autour d'un axe central, adapté pour former un nombre approprié de tours délimitant une chambre de combustion (300), et présente une première extrémité (31) qui sert d'entrée pour le fluide de transfert de chaleur à chauffer, et une seconde extrémité (32) qui sert de sortie pour ledit fluide de transfert de chaleur,
dans lequel les premières et deuxièmes extrémités (31 ; 32) font saillie par rapport au corps de récipient (2),
dans lequel ledit échangeur (1) est pourvu d'une cloison (5) adaptée pour diviser la chambre de combustion (300) en une première chambre sensible (310) et en une seconde chambre de condensation (320),
dans lequel
- ladite cloison (5) comprend un élément en forme de disque ayant un profil extérieur (51) à motif hélicoïdal, pourvu d'une couche de matériau isolant (50),
- ladite cloison (5) est vissable le long des spires du faisceau de tuyaux (3), de manière à régler et à faire varier les dimensions desdites chambres (310 ; 320),
et **caractérisé en ce que**
- ledit au moins un moyen capteur de température (4) est contraint et fixé aux première et deuxième extrémités (31 ; 32) par des moyens de montage appropriés (40) ;
- lesdits moyens de montage (40) (40) comprennent les moyens de fixation qui réalisent le verrouillage desdites extrémités (31 ; 32) avec les tuyaux.

2. Échangeur de chaleur selon la revendication précédente, dans lequel ledit au moins un moyen de détection de la température (4) est en contact direct avec la surface dudit faisceau de tuyaux (3).

3. Échangeur de chaleur selon la revendication 1, dans lequel lesdits moyens de montage (40) comprennent des demi-coques, des sangles, des pinces ou similaires pouvant être couplés.

4. Échangeur de chaleur selon toute revendication précédente, dans lequel ledit faisceau de tuyaux (3) est constitué d'un seul composant, c'est-à-dire qu'il est défini par un seul élément sans soudure.

5. Échangeur de chaleur selon toute revendication précédente, dans lequel ledit corps de récipient (2) comprend au moins un fond (20) de forme appropriée, au moins une coque (21) et au moins un couvercle (22), ledit fond (20) et ledit couvercle (22) pouvant être accouplés l'un à l'autre de manière à pouvoir loger, en coopération avec ladite coque (21), le faisceau de tuyaux (3).

6. Échangeur de chaleur selon la revendication précédente, dans lequel ledit fond (20) et ledit couvercle (22) sont pourvus d'une pluralité de sièges, de forme et de moulage appropriés, adaptés pour répliquer et reproduire le profil externe dudit faisceau de tuyaux (3).

7. Échangeur de chaleur selon les revendications précédentes 5 ou 6, dans lequel ledit fond (20) est pourvu de saillies longitudinales appropriées (200), sur lesquelles est fixé ledit couvercle (22), par des vis (222) ou similaires, de manière à verrouiller et à serrer les différents éléments qui composent ledit échangeur de chaleur (1).

8. Échangeur de chaleur selon la revendication précédente, dans lequel lesdites projections longitudinales (200) peuvent être pourvues de trous filetés (201) sur lesquels sont vissées lesdites vis (222).

9. Échangeur de chaleur selon au moins la revendication 5, dans lequel ledit couvercle (22) est pourvu d'une pluralité d'appendices (220) qui s'étendent radialement vers l'extérieur, chacun étant pourvu d'un trou de passage (221).

10. Échangeur de chaleur selon toute revendication précédente à partir de 5, dans lequel ladite coque (21) est pourvue, entièrement ou partiellement, d'une couche de matériau isolant capable de retenir la chaleur à l'intérieur de la chambre de combustion (300).

11. Échangeur de chaleur (1) selon toute revendication précédente, dans lequel ledit faisceau de tuyaux (3) a une section elliptique, tandis que les premières et deuxièmes extrémités (31 ; 32) ont une section circulaire qui facilite les opérations de raccordement aux tuyaux d'un système d'eau ou à tout autre composant mécanique.
